# EUROPÄISCHE PATENTANMELDUNG

(11) **EP 1 038 724 A2**
(43) Veröffentlichungstag der Anmeldung: **27.09.2000**
(21) Anmeldenummer: 00890097.9
(22) Anmeldetag: 24.03.2000
(51) Int. Cl.: B60P 1/16, B60P 1/64

(54) **Schwerfahrzeug**

(30) Priorität: 25.03.1999 AT 56199
(71) Anmelder: Ranner, Dietrich, Dipl.-Ing., A-5301 Eugendorf, Salzburg (AT)
(72) Erfinder: Ranner, Dietrich, Dipl.-Ing., A-5301 Eugendorf, Salzburg (AT)
(74) Vertreter: Casati, Wilhelm, Dipl.-Ing.

(57) **Zusammenfassung**

Die Erfindung betrifft ein Schwerfahrzeug zum Transport von Mulden mit einer Hubeinrichtung zum Anheben und Absetzen der an einem Gabelrahmen abgestützten Mulde, der die Mulde an drei ihrer Seiten umschließt und an dem die Hinterachse des Fahrzeuges gelagert ist, wobei die Öffnung (31) des Gabelrahmens (9) seitlich des Fahrzeuges angeordnet ist, und wobei ein bevorzugt am Gabelrahmen (9), insbesondere an dessen sich quer zur Fahrzeuglängsachse (33) erstreckenden Wangen (34, 35) gelagertes Querfahrwerk vorgesehen ist. Hiebei sind sowohl die Vorderachse (8) des Schwerfahrzeuges als auch dessen Hinterachse (11) über die Hubeinrichtung mit dem Gabelrahmen (9) gekoppelt und sowohl die Vorderachse (8) als auch die Hinterachse (11) gegenüber dem Gabelrahmen (9) anhebbar. Die Aufstandsfläche (32) der Mulde (22) überragt in der Transportstellung, den Gabelrahmen (9) nach unten (gegen die gemeinsame Tangentialebene der Fahrzeugräder).

## Beschreibung

Beim Beladen von Fahrzeugen treten häufig Zeitprobleme auf. In vielen Fällen dauert die Beladung eines Lastkraftwagens deshalb unverhältnismäßig lange, weil das Ladegut nur in relativ kleinen Mengen über einen großen Zeitraum herangeschafft werden kann. Um dennoch zu kostengünstigen Transporten zu kommen, werden Fahrzeuge mit Absetzmulden eingesetzt, die die Mulde zwecks Beladung, z.B. auf einer Baustelle absetzen und anschließend zu einer anderen Stelle fahren, um dort eine bereits beladene Mulde aufzunehmen und wegzutransportieren. Es gibt jedoch auch Fälle, in welchen kurzfristig eine große Ladekapazität zur Verfügung gestellt werden muß, während danach längere Zeit kein Bedarf besteht. Auch in diesem Fall ist der Einsatz von Absetzmulden wesentlich wirtschaftlicher als die bloß zeitweise Bereitstellung vieler Lastkraftwagen.

Es gibt bereits Lösungen für das Aufnehmen, Absetzen und Entleeren von Mulden, die sich im wesentlichen auf zwei grundsätzliche Lösungsansätze zurückführen lassen, nämlich Absetzgeräte für Serien-LKWs und Sonderfahrzeuge mit Absetzmulden.

Bei den Absetzgeräten haben sich sogenannte Hakengeräte mit hydraulischem Antrieb, die auf dem LKW-Chassis aufgebaut werden, gegenüber Seilwindenkonstruktionen durchgesetzt. Dabei nimmt das Gerät mit einem Haken die Mulde vorne an einer massiven Öse auf und zieht sie von hinten auf den LKW. Neben dem Vorteil der Nutzung von Serien LKWs ergeben sich bei diesen Geräten auch erhebliche Nachteile, weil Hakengeräte massiv gebaut werden müssen und daher schwer sind, wodurch die zur Verfügung stehende Nutzlast des Fahrzeuges eingeschränkt wird. Weiters wird beim Aufziehen der Mulde eine große Höhe erreicht, die vor allem im Untertagebau, aber auch in Fabrikshallen häufig nicht zur Verfügung steht. Schließlich beschränkt der Einsatz von Serien LKWs und auch das Ladeprinzip das maximale Transportgewicht und damit die Ladekapazität auf ca. 20 Tonnen.

Sonderfahrzeuge mit Absetzmulden verfügen in der Regel über einen gabelförmigen, nach hinten offenen Fahrzeugrahmen, an dem seitlich oder unterhalb die Hinterräder befestigt sind. Um eine Mulde aufzunehmen, wird der gabelförmige Fahrzeugrahmen in Richtung der Längsachse des Fahrzeuges so über die Mulde geschoben, daß diese von den Gabelwangen an beiden Längsseiten umfaßt wird. Durch eine hydraulische Hebeeinrichtung wird die Mulde soweit angehoben, daß sie abtransportiert werden kann. Bei dieser Lösung geht zwar der Vorteil, den die Verwendung eines Serien-LKWs bringt, verloren, dafür benötigt das Sonderfahrzeug zum Aufnehmen der Mulde keine die für das Beladen der Mulde ohnehin notwendige Raumhöhe übersteigende Raumhöhe. Außerdem können größere Lasten als mit dem Hakengerät transportiert werden. Deshalb werden solche Fahrzeuge meist im Untertagebau eingesetzt.

Neben den Vorteilen der geringen Ladehöhe und der größeren Nutzlast gegenüber Hakengeräten ergeben sich jedoch auch bei der Lösung mit Sonderfahrzeug, Absetzmulde und Gabelrahmen zu deren Aufnahme, nicht unerhebliche Nachteile, weil das Fahrgestell die Mulde an beiden Längsseiten umfaßt und dadurch die Gesamtbreite des Fahrzeuges um mehr als einen Meter die Breite der Mulde überschreitet. Das ist bei den beengten Verhältnissen im Untertagebau besonders ungünstig. Schließlich muß das Fahrzeug nach Absetzen der Mulde solange entlang der Muldenlängsachse verfahren werden, bis die Gabel frei ist; erst dann kann das Fahrzeug abbiegen. Dadurch ist ein Muldenabstand von 15 - 20 m erforderlich, der der Schaffung großer Ladekapazitäten durch Aufstellen von Mulden in Reihe, z.B. entlang einer Tunnelwand, hinderlich ist. Die bekannte Rahmenkonstruktion bedingt eine komplizierte Radaufhängung mit teurem Einzelantrieb.

Der Erfindung liegt daher die Aufgabe zugrunde, ein Schwerfahrzeug zum Transport von Mulden mit einer Hubeinrichtung zum Anheben und Absetzen der an einem Gabelrahmen abgestützten Mulde, der die Mulde an drei ihrer Seiten umschließt und an dem die Hinterachse des Fahrzeuges gelagert ist, so auszugestalten, daß die bei den herkömmlichen Sonderfahrzeugen auftretenden Nachteile - wie zuvor erwähnt - vermieden werden. Hiezu schlägt die Erfindung vor, daß die Öffnung des Gabelrahmens seitlich des Fahrzeuges angeordnet ist, daß ein bevorzugt am Gabelrahmen, insbesondere an dessen sich quer zur Fahrzeuglängsachse erstreckenden Wangen gelagertes Querfahrwerk vorgesehen ist und daß sowohl die Vorderachse des Schwerfahrzeuges als auch dessen Hinterachse über die Hubeinrichtung mit dem Gabelrahmen gekoppelt und sowohl die Vorderachse als auch die Hinterachse gegenüber dem Gabelrahmen anhebbar sind und daß die Aufstandsfläche der Mulde, in der Transportstellung, den Gabelrahmen nach unten (gegen die gemeinsame Tangentialebene der Fahrzeugräder) überragt. Da bei dem erfindungsgemäßen Fahrzeug die Mulde (mit Füßen) den Gabelrahmen nach unten überragt, sitzt sie früher auf dem Boden auf als der Gabelrahmen, wodurch dieser von der Mulde freikommt. Durch die in den sich quer zur Längsachse des Fahrzeuges erstreckenden Wangen des Gabelrahmens angeordneten Querfahrwerke, die als antreibbare Rad- oder Raupenfahrwerke ausgebildet sein können, kann nach Abheben der Fahrzeugvorder- und Hinterachsen vom Boden, das Fahrzeug seitlich von der Mulde wegbewegt werden, da die Öffnung des Gabelrahmens seitlich des Fahrzeuges angeordnet ist. Hebt man nach dem seitlichen Ausfahren des Gabelrahmens den Gabelrahmen wieder an, so ist das Schwerfahrzeug wieder fahrbereit. Zum Aufnehmen einer Mulde wird in umgekehrter Reihenfolge vorgegangen.

Die Verwendung von Raupenfahrwerken erlaubt einerseits eine günstige Unterbringung des Querfahrwerkes, wenn die Wangen des Gabelarmes als im wesentlichen U-förmige Hohlquerschnitte ausgebildet sind und darüberhinaus sichert die Verwendung von Raupenfahrwerken einen ausreichenden Griff auf natürlich gewachsenem Boden. Sind die Raupenfahrwerke voneinander mit unterschiedlicher Geschwindigkeit, gegebenenfalls auch unterschiedlicher Richtung steuerbar antreibbar, so kann die Öffnung des Gabelrahmens genau auf die Mulde ausgerichtet werden, und der Gabelrahmen mittels der Querfahrwerke genau in den Gabelrahmen plaziert werden.

In weiterer Ausgestaltung des erfindungsgemäßen Schwerfahrzeuges kann so vorgegangen werden, daß die Hinterachse um ein Lager schwenkbar angeordnet ist, das bezüglich der Hinterachse exzentrisch angeordnet und mit der hinteren Wange des Gabelrahmens, bevorzugt über eine Konsole, fest verbunden ist, und daß die Vorderachse längs einer, bevorzugt als Prismenführung ausgebildeten, vertikalen Geradführung bewegbar gelagert ist, wobei die Hubeinrichtung zum Anheben und Absetzen der Mulde von, insbesondere hydraulisch betätigbaren, Kolben/Zylinderaggregaten gebildet ist, die voneinander getrennt, der Vorderachse und der Hinterachse zugeordnet sind. Die schwenkbare Ausbildung der Hinterachse um ein exzentrisch angeordnetes Lager erlaubt es, die Mulde lang auszuführen und damit an Fassungsvermögen zu gewinnen, im Vergleich zu einer Anordnung, bei der die Hinterachse vertikal auf- und abbewegbar gegenüber dem Gabelrahmen gelagert wäre. Das Vorsehen einer Konsole für die Lagerung der Hinterachse erlaubt darüberhinaus, die Hinterachse in einem entsprechenden Abstand vom Gabelrahmen anzuordnen, was ebenfalls der Vergrößerung der Mulde nach hinten zugute kommt. Die Geradführung im vorderen Bereich der Mulde erlaubt es, die Mulde mit ihrem vorderen Ende möglichst nahe an die Vorderachse heranzuführen und dadurch eine günstige Lastverteilung zu erreichen.

Für die Betätigung der Hinterachse beim Absenken der Mulde und dem darauffolgenden Anheben der Hinterachse gegenüber dem Boden erweist es sich als zweckmäßig, wenn das der Hinterachse zugeordnete Kolben-/Zylinderaggregat zwischen der hinteren Wange des Gabelrahmens und einer Kurbel angeordnet ist, die das bezüglich der Hinterachse exzentrisch angeordnete Lager der Hinterachse mit der Hinterachse verbindet.

In weiterer Ausgestaltung des erfindungsgemäßen Schwerfahrzeuges kann eine Konstruktion vorgesehen werden, bei der die Vorderachse an einem bevorzugt auch das Fahrerhaus, gegebenenfalls die Antriebsaggregate für den Fahrantrieb des Fahrzeuges und die Hubeinrichtung tragenden, Rahmen gelagert ist, der einen um eine horizontale Achse schwenkbaren Drehkranz für ein vertikalachsiges Knickgelenk trägt, an dem der Gabelrahmen, bevorzugt die vordere Wange des Gabelrahmens, befestigt ist. Diese Anordnung verhindert, daß bei Befahren von unebenen Straßen Torsionsbeanspruchungen in den Gabelrahmen gelangen.

Zum Entleeren der Mulde wird eine im wesentlichen bekannte, hydraulische Kippvorrichtung eingesetzt, die durch ein selbständig an der Mulde andockendes Kippgelenk und einen automatisch im Muldenhorn einrastenden Stufenzylinder ergänzt wird, in der Weise, daß auch unabhängig von der besonderen Anordnung des Gabelrahmens und der Querfahrwerke sowie gegebenenfalls auch der anhebbaren Vorder- und Hinterachse, die Mulde im Bereich ihres in Fahrtrichtung hinteren Endes über eine lösbare Kupplung (Andockvorrichtung) schwenkbar mit dem Rahmen verbunden ist und daß beispielsweise die lösbare Kupplung einen Schwenkarm aufweist, der in einem bezüglich des Rahmens ortsfesten Schwenklager gelagert ist und an der Mulde angreift und daß an dem in Fahrtrichtung vorderen Ende der Mulde , bevorzugt an einem dort angeordneten Horn, ein Kolben-/Zylinderaggregat mit Stufenzylinder angreift, der schwenkbar an einem bezüglich des die Vorderachse tragenden Rahmens ortsfesten Lagers, das bevorzugt am Knickgelenk des die Vorderachse tragenden Rahmens angeordnet ist, gelagert ist und dessen Kolben mit der Mulde, insbesondere mit deren Horn bevorzugt verrastbar ausgebildet ist.

Zum Verschwenken des Stufenzylinders weg von der Mulde während des Absetzens der Mulde, kann in einer Ausgestaltung der Erfindung vorgesehen sein, daß an dem mit Stufenzylinder ausgebildeten Kolben-/Zylinderaggregat ein weiteres Kolben-/Zylinderaggregat außen am Zylindermantel angreift.

Die Erfindung wird nachstehend anhand einer beispielsweisen Ausführungsform eines erfindungsgemäßen Schwerfahrzeuges näher erläutert. Es zeigen:
Fig. 1 ein erfindungsgemäß ausgebildetes Schwerfahrzeug in Seitenansicht,
Fig. 2 den zugeordneten Grundriß, wobei jedoch die Mulde und die zum Kippen der Mulde vorgesehenen Elemente nicht dargestellt sind, um die Zeichnung nicht zu überlasten,
Fig. 3 eine der Fig. 2 entsprechende Ansicht, jedoch in einer gegenüber Fig. 2 veränderten Lage mit gegenüber dem Gabelrahmen seitlich ausgelenktem Vorderwagen, bei Befahren einer Linkskurve,
Fig. 4 in einer der Fig. 1 entsprechenden Darstellung das Schwerfahrzeug mit auf dem Boden abgesenkter Mulde,

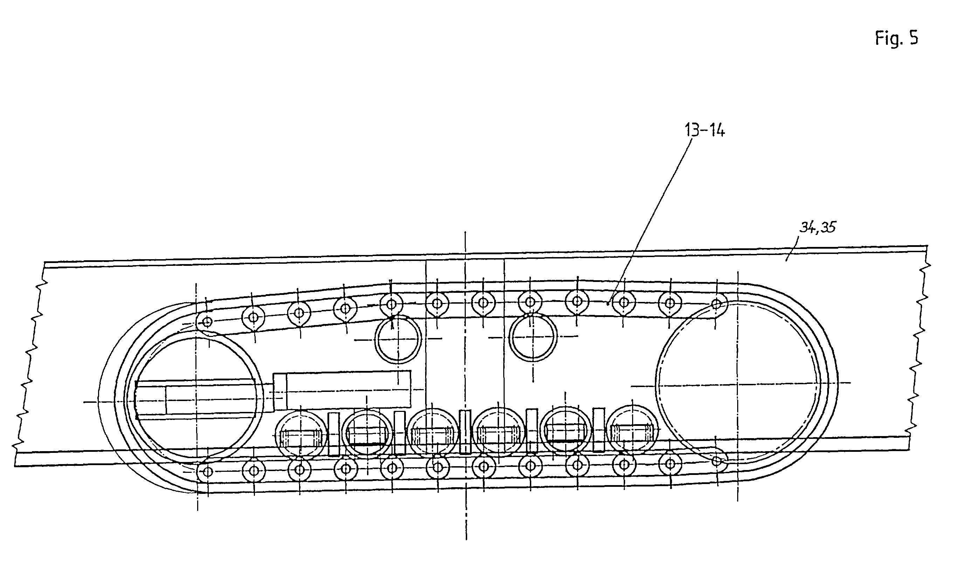

Fig. 5 ein Detail aus Fig. 1 betreffend die Anordnung des Querfahrwerkes in einer der Wangen des Gabelrahmens, und

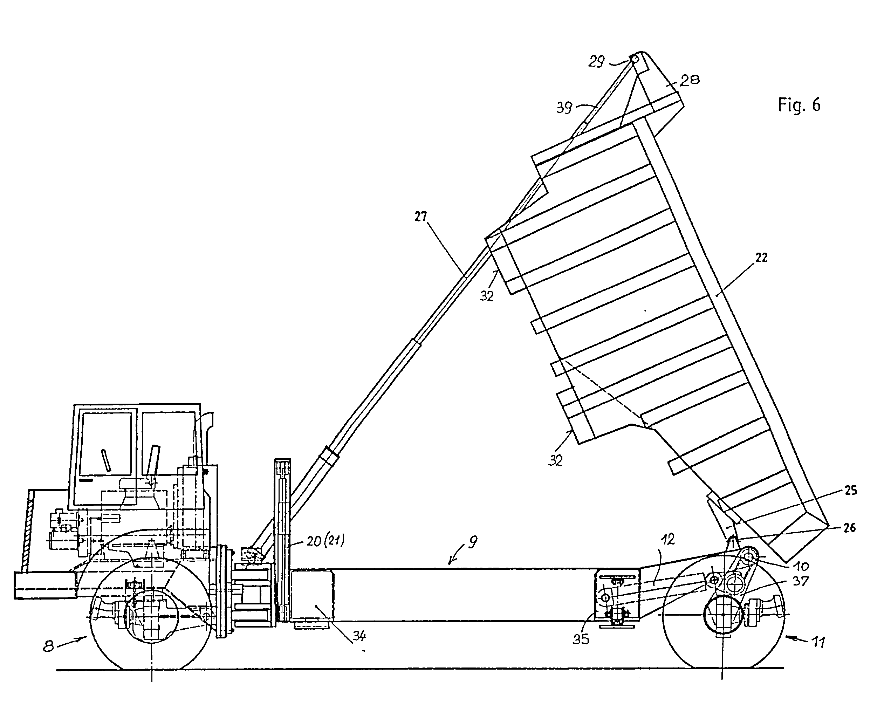

Fig. 6 das erfindungsgemäße Schwerfahrzeug in einer Seitenansicht mit hochgeschwenkter Mulde zwecks Entleerung derselben.

In der Zeichnung ist mit 1 der sogenannte Vorderwagen und mit 2 der Hinterwagen des erfindungsgemäßen Schwerfahrzeuges bezeichnet. Vorder- und Hinterwagen sind über ein Knickgelenk 15 miteinander verbunden, welches das Verschwenken des Vorderwagens 1 gegenüber dem Hinterwagen 2 um eine vertikale Achse zwecks Lenkens des Kraftfahrzeuges erlaubt. Die Lenkung erfolgt über Hydraulikzylinder 16 und 17.

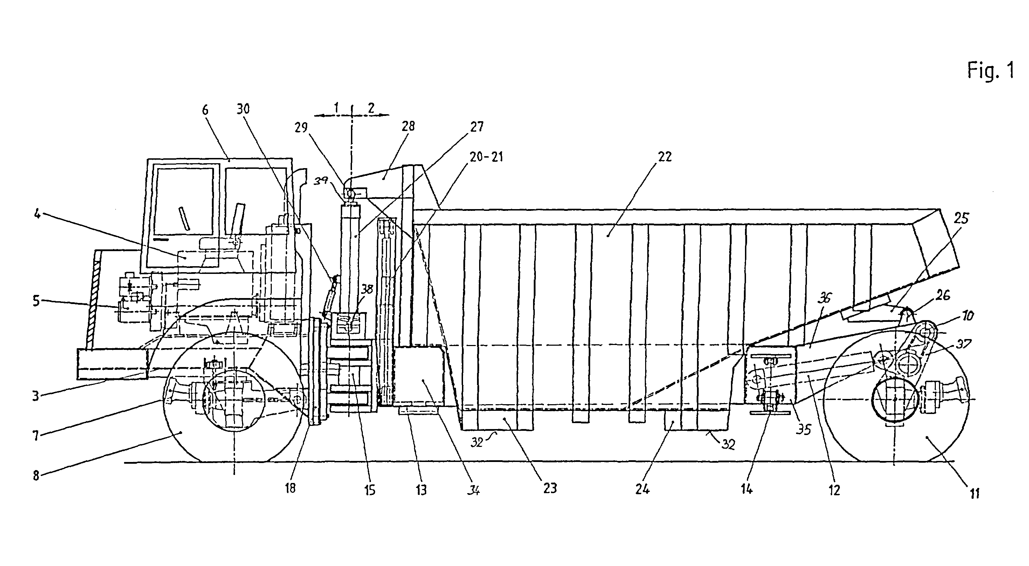

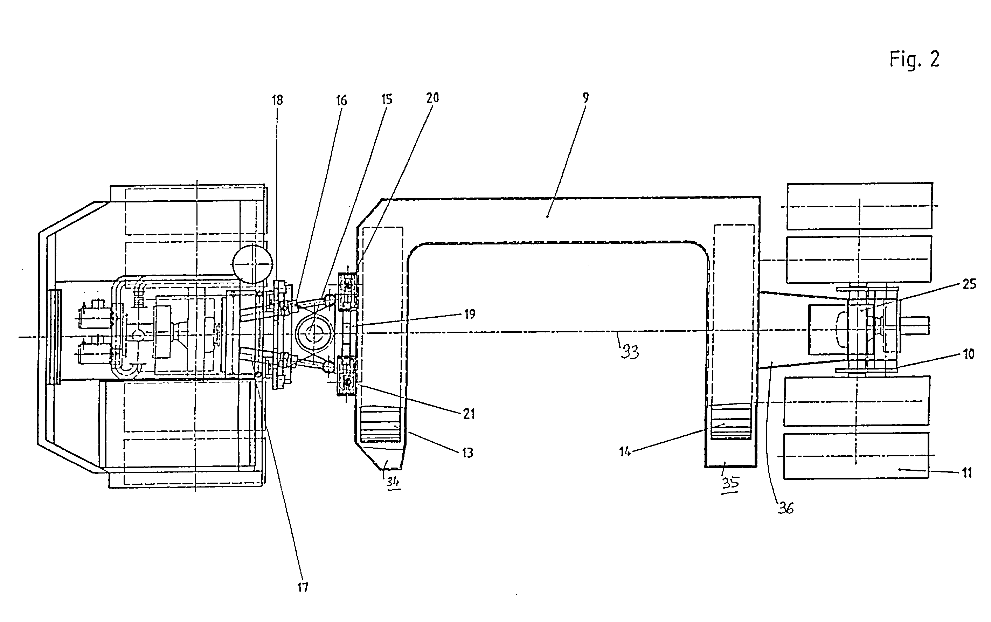

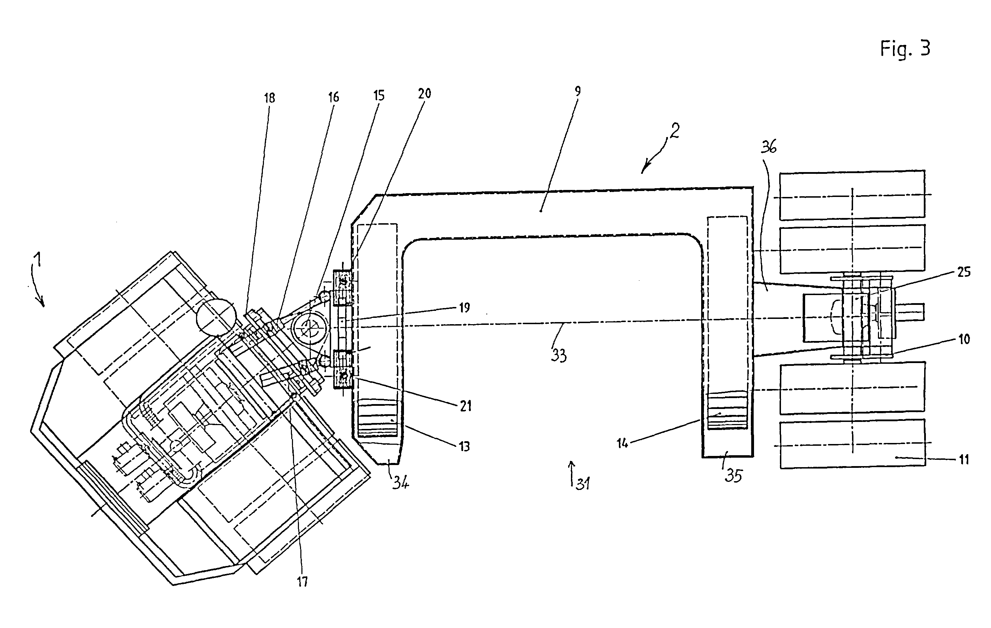

In Fig. 3 ist eine Relativlage zwischen dem Vorderwagen 1 und dem Hinterwagen 2 gezeigt, wie sie durch Ausfahren des Kolben-/Zylinderaggregates 16 und Einfahren des Kolben-/Zylinderaggregates 17 gegenüber den in den Fig. 1 und 2 gezeigten Lagen erreicht werden kann. Der Vorderwagen 1 weist einen Rahmen 3 auf, der einen Antriebsmotor 4 für den Fahrantrieb des Schwerfahrzeuges, und Hydraulikpumpen 5 besitzt, deren Aufgabe nachstehend noch erläutert werden wird.

Das Führerhaus 6 ist ebenfalls am Grundrahmen 3 abgestützt, der auch die antreibbare Vorderachse 8 des Schwerfahrzeuges trägt. Der Antrieb der Vorderachse 8 erfolgt durch einen Hydraulikmotor 7. Der Hinterwagen 2 weist zur Aufnahme einer Mulde 22 einen Gabelrahmen 9 auf, der die Hinterachse 11 trägt, die um ein Lager 10 schwenkbar ist, das an einer Konsole 36 montiert ist, die ihrerseits an einer der beiden Wangen 35 des Gabelrahmens 9 befestigt ist. Zum Verschwenken der Hinterachse 11 um das Lager 10 ist ein Kolben-/Zylinderaggregat 12 vorgesehen, das zwischen der hinteren Wange 35 des Gabelrahmens 9 und einer Kurbel 37 angeordnet ist, die das bezüglich der Hinterachse 11 exzentrisch angeordnete Lager 10 der Hinterachse mit der Hinterachse 11 verbindet.

Die Öffnung 31 des Gabelrahmens 9 ist, wie die Fig. 2 und 3 erkennen lassen, seitlich des Fahrzeuges angeordnet. In den sich quer zur Fahrzeuglängsachse 32 erstreckenden Wangen 34 und 35 des Gabelrahmens 9 ist ein Querfahrwerk untergebracht, das in der in der Zeichnung dargestellten, bevorzugten Variante als Raupenfahrwerk 13, 14 ausgebildet ist. Für das Querfahrwerk könnte jedoch auch ein vielrädriges Fahrwerk vorgesehen werden. Die Raupenfahrwerke 13 und 14 sind bevorzugt unabhängig voneinander bremsbar.

Der Rahmen 3 trägt einen vertikalen Drehkranz 18, an dem über eine Lasche das vertikalachsige Knickgelenk 15 befestigt ist. Der Drehkranz 18 erlaubt ein Pendeln des Vorderwagens 1 gegenüber dem Hinterwagen 2 um die Fahrzeuglängsachse 33, wodurch verhindert wird, daß Straßenunebenheiten den Gabelrahmen 9 durch ein Moment belasten.

Die Vorderachse 8 des Schwerfahrzeuges ist mittels Hydraulikzylindern 20, 21 in als Prismenführungen 19 ausgebildeten vertikalen Geradführungen auf- und abbewegbar. Dadurch ist es möglich, wenn der Gabelrahmen 9 über die Querfahrwerke (Raupenfahrwerke 13, 14) gegen den Boden abgestützt ist, den Vorderwagen 1 gegenüber dem Hinterwagen 2 anzuheben, dies solange, bis die Vorderachse 8 (bzw. die Antriebsräder) keinen Bodenkontakt mehr aufweisen. Sobald der Gabelrahmen 9 über das Querfahrwerk am Boden abgestützt ist, kann auch die Hinterachse 11 mittels des Kolben-/Zylinderaggregates 12 um das Hinterachslager 10 verschwenkt und vom Boden abgehoben werden, bis die Hinterräder vom Boden freikommen.

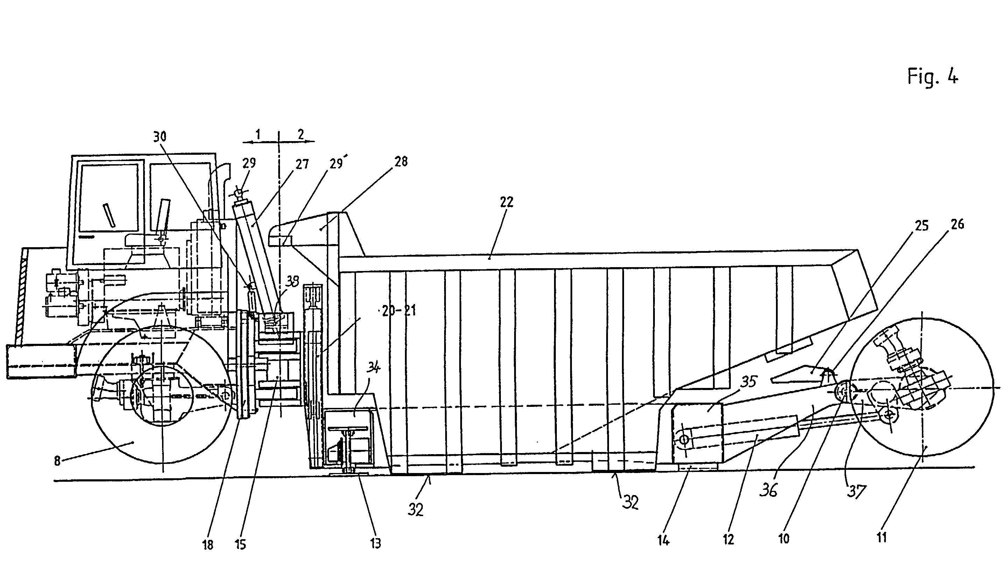

Fig. 4 zeigt eine Lage, bei der sowohl die vorderen Antriebsräder als auch die hinteren Räder, die gegebenenfalls ebenfalls angetrieben sein können, vom Boden abgehoben sind. In dieser Stellung kann mittels der Querfahrwerke (Raupenfahrwerke 13, 14) der Gabelrahmen seitlich unter der mit ihren Aufstandsflächen 32 am Boden ruhenden Mulde seitlich wegbewegt werden, wodurch die Mulde 22 vom Fahrzeug entladen ist.

Die Aufstandsfläche 32 der Mulde 22 überragt in der Transportstellung, wie Fig. 1 zeigt, den Gabelrahmen 9 nach unten. Die Aufstandsfläche kann von zwei Füßen gebildet werden, die sich über die gesamte Breite der Mulde quer zur Fahrzeuglängsachse 32 erstrecken. In der Transportstellung kann der Abstand der Aufstandsflächen 32 der Mulde 22 von den Raupenfahrwerken 13, 14 bzw. dem unteren Rand des Gabelrahmens 9 etwa 20 cm betragen. Dies sichert, daß die Mulde vom Gabelrahmen 9 bzw. dessen Vorder- und Hinterwangen 34, 35 freikommt, sobald die Mulde am Boden aufsitzt.

Die Mulde 22 ist im Bereich ihres in Fahrtrichtung hinteren Endes über eine lösbare Kupplung (Andockvorrichtung) schwenkbar mit dem Gabelrahmen 9 verbunden. Die Andockvorrichtung ist von der Mulde gelöst, wenn der Gabelrahmen gegen den Boden abgesenkt wird. Die lösbare Kupplung besitzt einen Schwenkarm 25, der in einem bezüglich des Rahmens 9 ortsfesten Schwenklager 26 gelagert ist und der an der Mulde 22 angreift. Im dargestellten Ausführungsbeispiel ist das Schwenklager 26 an der Konsole 36, die mit der hinteren Wange 35 des Gabelrahmens 9 fest verbunden ist, fixiert. An dem in Fahrtrichtung vorderen Ende der Mulde 22 greift, bevorzugt an einem dort angeordneten Horn 28, ein Kolben-/Zylinderaggregat 28 mit Stufenzylinder 27 an. Der Stufenzylinder 27 ist in einem bezüglich des die Vorderachse 8 tragenden Rahmens 3 ortsfesten Lager 38 schwenkbar angeordnet. Dieses Lager 38 ist in dem dargestellten Ausführungsbeispiel am Knickgelenk 15 des die Vorderachse 8 tragenden Rahmens 3 befestigt. Der Kolben 38 des Stufenzylinders 27 kann mit der Mulde 22, insbes. mit deren Horn 28, verrastet werden. Die Verrastung kann dabei ähnlich erfolgen, wie dies bei einem Karabiner der Fall ist. Diese Verrastung ist erforderlich, um zu verhindern, daß beim Hochschwenken die Mulde nach hinten abstürzt. Während des Absetzens ist das Gelenk 29 des Stufenzylinders 27 vom Horn 28 der Mulde 22 entriegelt, wodurch der Stufenzylinder 27 mittels eines außen am Stufenzylinder 27 angreifenden Kolben-/Zylinderaggregates 30 aus dem Bereich des Hornes 28 der Mulde 22 ausgeschwenkt werden kann.

Das in der Zeichnung beispielsweise dargestellte Fahrzeug funktioniert wie folgt: Der Vorderwagen 1 und der Hinterwagen 2, die über das Knickgelenk 15 schwenkbar miteinander verbunden sind, bilden das Fahrgestell des LKWs. Der Gabelrahmen 9 ist längs der Prismenführungen 19 und mittels der um das Hinterachslager 10 schwenkbaren Hinterachse 11 auf die in die Wangen des Gabelrahmens integrierten Raupenfahrwerke (Radfahrwerke) 13 und 14 absenkbar. Nach Lösen des Schwenkarmes 25 der Andockvorrichtung von der Mulde 22 und Ausschwenken des Stufenzylinders 27 aus dem Gelenk 29, mit dem es verrastet ist, durch den Hilfszylinder 30, kann der Gabelrahmen 9 mittels der Prismenführung 19 und den Hydraulikzylindern 20 und 21 vorne und durch die um das Gelenk 10 mittels Hydraulikzylinder 12 ausschwenkende Hinterachse 11 gleichzeitig abgesenkt werden. Da die Füße 23 und 24 der Mulde 22 tiefer liegen als die Vorder- und Hinterachse, ist das Fahrzeug quer zur Mulde 22 frei beweglich, sobald die Raupenfahrwerke 13 und 14 Bodenkontakt haben und die Vorderachse 8 und die Hinterachse 11 die obere Endlage (Fig. 3) erreicht haben. Das Fahrzeug kann daher seitlich aus der Mulde herausgefahren werden. Da die Raupenfahrwerke 13, 14 in üblicher Weise durch Bremsen steuerbar sind, ist das Ausrichten des Fahrzeuges auf die Mulde 22 und damit ein problemloses Aus- und Einfahren möglich. Die Mulde 22 kann daher sowohl beladen als auch unbeladen in beschriebener Weise abgesetzt als auch in umgekehrter Reihenfolge aufgenommen und transportiert werden.

Wie Fig. 3 zeigt, würde der Stufenzylinder 27 mit dem Vorderwagen 1 beim Absenken des Gabelrahmens 9 hochfahren, da er am Knickgelenk 15 befestigt ist. Der Hilfszylinder 30 hat daher auch die Aufgabe, vor dem Absetzvorgang den Kippzylinder 27 aus dem Bereich des Hornes 28 herauszuschwenken.

Fig. 4 zeigt das Kippen der Mulde 22. Die Mulde 22 befindet sich auf dem sich in der Transportstellung befindlichen Fahrzeug und der Vorgang des Kippens erfolgt in bekannter Weise durch Ausfahren des in das Gelenk 29 eingerasteten Kolbens 39 des Kippzylinders 27. Der Schwenkarm 25 ist dabei mechanisch so mit der Mulde 22 verriegelt, daß, sobald die Mulde auch nur geringfügig angehoben wird, eine irrtümliche Entriegelung des Schwenkarmes 25 nicht möglich ist (in Fig. 4 nicht dargestellt). Der Stufenzylinder 27 mit dem in gekippter Stellung mit dem Horn 28 der Mulde 22 verriegelten Gelenk 29 bildet mit der Mulde 22 und dem Schwenklager 26 ein stabiles Dreieck, das ein Abwerfen der Mulde nach hinten sicher verhindert.

Die einzelnen, hier beschriebenen Vorgänge sind weitestgehend automatisiert, sodaß mit dem Befehl "Absenken des Fahrgestells" automatisch die Andockvorrichtung (Schwenkarm 25) von der Mulde 22 gelöst und der Stufenzylinder 27 von der Mulde 22 weggeschwenkt wird, bevor die Absenkung des Gabelrahmens 9 gleichzeitig durch Anheben von Vorderwagen 1 und Ausschwenken von Hinterachse 11 erfolgt. Die Querfahrwerke 13 und 14 setzen daher gleichzeitig auf dem Boden auf, ohne daß der Fahrer mehr zu tun hat als das Fahrzeug anzuhalten und den Absetzvorgang durch Betätigen eines Schalters auszulösen.

## Patentansprüche

1. Schwerfahrzeug zum Transport von Mulden mit einer Hubeinrichtung zum Anheben und Absetzen der an einem Gabelrahmen abgestützten Mulde, der die Mulde an drei ihrer Seiten umschließt und an dem die Hinterachse des Fahrzeuges gelagert ist, dadurch gekennzeichnet, daß die Öffnung (31) des Gabelrahmens (9) seitlich des Fahrzeuges angeordnet ist, daß ein bevorzugt am Gabelrahmen (9), insbesondere an dessen sich quer zur Fahrzeuglängsachse (33) erstreckenden Wangen (34, 35) gelagertes Querfahrwerk vorgesehen ist und daß sowohl die Vorderachse (8) des Schwerfahrzeuges als auch dessen Hinterachse (11) über die Hubeinrichtung mit dem Gabelrahmen (9) gekoppelt und sowohl die Vorderachse (8) als auch die Hinterachse (11) gegenüber dem Gabelrahmen (9) anhebbar sind und daß die Aufstandsfläche (32) der Mulde (22), in der Transportstellung, den Gabelrahmen (9) nach unten (gegen die gemeinsame Tangentialebene der Fahrzeugräder) überragt.

2. Schwerfahrzeug nach Anspruch 1, dadurch gekennzeichnet, daß das Querfahrwerk von in den sich quer zur Fahrzeuglängsachse erstreckenden Wangen (34, 35) des Gabelrahmens (9) angeordneten Raupenfahrwerken (13, 14) gebildet ist, wobei die Raupenfahrwerke (13, 14) der beiden Wangen (34, 35) bevorzugt mit unterschiedlicher Geschwindigkeit, gegebenenfalls auch unterschiedlicher Richtung steuerbar antreibbar sind.

3. Schwerfahrzeug nach Anspruch 1 oder 2, dadurch gekennzeichnet, daß die Hinterachse (11) um ein Lager (10) schwenkbar angeordnet ist, das bezüglich der Hinterachse (11) exzentrisch angeordnet und mit der hinteren Wange (35) des Gabelrahmens (9) bevorzugt über eine Konsole (36) fest verbunden ist, und daß die Vorderachse (8) längs einer, bevorzugt als Prismenführung (19) ausgebildeten, vertikalen Geradführung bewegbar gelagert ist, wobei die Hubeinrichtung zum Anheben und Absetzen der Mulde (22) von, insbesondere hydraulisch betätigbaren, Kolben/Zylinderaggregaten (20, 21; 12) gebildet ist, die voneinander getrennt, der Vorderachse (8) und der Hinterachse (11) zugeordnet sind.

4. Schwerfahrzeug nach Anspruch 3, dadurch gekennzeichnet, daß das der Hinterachse (11) zugeordnete Kolben-/Zylinderaggregat (12) zwischen der hinteren Wange (35) des Gabelrahmens (9) und einer Kurbel (37) angeordnet ist, die das bezüglich der Hinterachse (11) exzentrisch angeordnete Lager (10) der Hinterachse mit der Hinterachse (11) verbindet.

5. Schwerfahrzeug nach einem der Ansprüche 1 bis 4, dadurch gekennzeichnet, daß die Vorderachse (8) an einem bevorzugt auch das Fahrerhaus (6), gegebenenfalls die Antriebsaggregate (5, 4) für den Fahrantrieb des Fahrzeuges und die Hubeinrichtung tragenden, Rahmen (3) gelagert ist, der einen um eine horizontale Achse schwenkbaren Drehkranz (18) für ein vertikalachsiges Knickgelenk (15) trägt, an dem der Gabelrahmen (9), bevorzugt die vordere Wange (34) des Gabelrahmens (9), befestigt ist.

6. Schwerfahrzeug, mit einer anheb- und absenkbaren Mulde und einem Rahmen, an dem die Mulde abgestützt ist, insbesondere nach einem der Ansprüche 1 bis 5, dadurch gekennzeichnet, daß die Mulde (22) im Bereich ihres in Fahrtrichtung hinteren Endes über eine lösbare Kupplung (Andockvorrichtung) schwenkbar mit dem Rahmen (9) verbunden ist und daß beispielsweise die lösbare Kupplung einen Schwenkarm (25) aufweist, der in einem bezüglich des Rahmens (9) ortsfesten Schwenklager (26) gelagert ist und an der Mulde (22) angreift und daß an dem in Fahrtrichtung vorderen Ende der Mulde (22), bevorzugt an einem dort angeordneten Horn (28) ein Kolben-/Zylinderaggregat mit Stufenzylinder (27) angreift, der schwenkbar an einem bezüglich des die Vorderachse (8) tragenden Rahmens (3) ortsfesten Lagers (38), das bevorzugt am Knickgelenk (15) des die Vorderachse (8) tragenden Rahmens (3) angeordnet ist, gelagert ist und dessen Kolben (39) mit der Mulde (22), insbesondere mit deren Horn (28), bevorzugt verrastbar ausgebildet ist.

7. Schwerfahrzeug nach Anspruch 6, dadurch gekennzeichnet, daß an dem mit Stufenzylinder (27) ausgebildeten Kolben-/Zylinderaggregat ein weiteres Kolben-/Zylinderaggregat (30) außen am Zylindermantel angreift.
